# EUROPÄISCHE PATENTSCHRIFT

(11) **EP 1 203 169 B1**
(45) Veröffentlichungstag und Bekanntmachung des Hinweises auf die Patenterteilung: **17.01.2007**
(21) Anmeldenummer: 00951379.7
(22) Anmeldetag: 13.07.2000
(51) Int. Cl.: F16D 41/08, F16D 11/16

(54) **KUPPLUNG**
CLUTCH
EMBRAYAGE

(30) Priorität: 21.08.1999 DE 19939736
(43) Veröffentlichungstag der Anmeldung: 08.05.2002
(73) Patentinhaber: Schaeffler KG, 91074 Herzogenaurach (DE)
(72) Erfinder: NEUWIRTH, Ernst, D-91074 Herzogenaurach (DE)
(86) Internationale Anmeldenummer: PCT/EP2000/006664
(87) Internationale Veröffentlichungsnummer: WO 2001/014760

(56) Entgegenhaltungen:
- EP-A- 0 791 748
- DE-U- 9 101 110
- GB-A- 1 129 235

## Beschreibung

Die vorliegende Erfindung betrifft Kupplungen gemäß dem Oberbegriff von Anspruch 1, denen zwei zueinander beweglich angeordnete Teile miteinander einkuppelbar und auskuppelbar sind.

Beispielsweise sind aus DE 91 01 110 U schaltbare Freilaufkupplungen bekannt, bei denen Klemmrollen in keilförmige Klemmspalte hineingefedert sind, wobei infolge einer Relativdrehung der beiden Teile zueinander die Klemmrollen in die keilförmigen Klemmspalte hineingezwängt werden. Zum Auskuppeln kann beispielsweise ein Schaltkäfig vorgesehen sein, in dessen Käfigtaschen die Klemmrollen angeordnet sind. Unter einer Verdrehung des Schaltkäfigs werden die Klemmrollen mitgenommen und außer Eingriff mit dem keilförmigen Klemmspalt gebracht, so dass die Kupplung ausgerückt ist. Im eingerückten Zustand können derartige schaltbare Klemmenfreiläufe jedoch unerwünschten Mikrobewegungen unterworfen sein, wobei ein Rutschen des einen Teils gegenüber dem anderen Teil möglich ist. Derartige Mikrobewegungen können durch Schwingungen hervorgerufen werden, denen eines der beiden Teile oder beide Teile ausgesetzt sind.

Aus der GB 1 129 235 A ist eine zur Steuerung von Allradantrieben in Kraftfahrzeugen vorgesehene Kupplung bekannt, welche mit einzelnen Sperrkörpern arbeitet. Mehrere Sperrkörper weist auch eine aus der EP 07 91 748 A1 bekannte Freilaufkupplung für einen Anlasser auf.

Aufgabe der vorliegenden Erfindung ist es daher, eine Kupplung anzugeben, bei der die oben erläuterten Nachteile vermieden sind.

Die erfindungsgemäße Kupplung ist mit zwei zueinander beweglich angeordneten Teilen versehen, von denen das eine mit mehreren Rasten und von denen das andere mit wenigstens einer den Rasten zugewandten Anschlagfläche versehen ist, wobei wenigstens ein Sperrkörper bei Eingriff in zumindest eine der Rasten einerseits und Anlage an die Anschlagfläche andererseits die beiden Teile formschlüssig miteinander verbindet, und wobei ein Freiraum vorgesehen ist, in dem der Sperrkörper außer Eingriff mit den Rasten ist, und wobei ein an dem Sperrkörper angreifender verschiebbarer Einrücker vorgesehen ist, um den Sperrkörper aus den Freiraum heraus und in die Raste hinein zu verlagern, und wobei ein an dem Sperrkörper angreifender Ausrücker vorgesehen ist, um den Sperrkörper aus der Raste heraus und in den Freiraum hinein zu verlagern.

Der lichte Abstand zwischen der Anschlagfläche und der gegenüberliegenden Raste ist kleiner als die Erstreckung des Sperrkörpers zwischen den beiden Teilen. Auf diese Weise ist eine formschlüssige Verbindung bei eingerückter Kupplung sichergestellt, ohne dass ein Rutschen der beiden Teile zueinander möglich ist.

Unter dem Ausrücken des Ausrückers rückt der Sperrkörper aus der Raste heraus und in den Freiraum hinein. Unter dem Einrücken des Einrückers rückt der Sperrkörper aus dem Freiraum heraus und in die Raste hinein. Der Ausrücker und der Einrücker können als jeweils einzeln an dem Sperrkörper angreifende Bauteile ausgebildet sein, wie weiter unten beschrieben ist. Allerdings sind auch erfindungsgemäße Weiterbildungen erfaßt, bei denen der Ausrücker und der Einrücker durch ein und dasselbe Bauteil gebildet ist. Beispielsweise kann ein Stößel gelenkig mit dem Sperrkörper verbunden sein, wobei unter einem Einrücken des Stößels der Sperrkörper in die Raste hineingedrückt und unter einem Ausrücken des Stößels aus der Raste herausgezogen wird.

Die beiden Teile können mit ebenen, einander zugewandten Flächen oder vorzugsweise mit einander zugewandten zylindrischen Flächen versehen sein, wobei zwischen diesen Flächen die Sperrkörper angeordnet sind. Vorzugsweise sind jedoch die beiden Teile durch Ringe gebildet, zwischen denen die Sperrkörper angeordnet sind. Die Kupplung ist in diesem Fall als einbaufertige Baueinheit ausgebildet.

Die Anschlagfläche ist vorzugsweise als Rampe ausgebildet, die gemeinsam mit der Raste eine Art keilförmigen Spalt begrenzt, in den hinein der Sperrkörper hineingezwängt wird.

Die Neigung der Rampe ist so bemessen, dass eine Selbsthemmung ausgeschlossen ist. Das bedeutet, dass nach dem Entfernen einer Last, die von dem einen auf das andere Teil übertragen wird, der Sperrkörper nicht länger in einem von der Rampe begrenzten keilförmigen Spalt eingezwängt bleibt.

Der Sperrkörper ist vorzugsweise rotationssymmetrisch ausgebildet. Die Verwendung von Kugeln, Rollen oder Nadeln als Sperrkörper ist besonders günstig, da derartige rotationssymmetrische Bauteile einfach herzustellen sind. Allerdings kann auch eine Formgebung für den Sperrkörper zweckmäßig sein, die von einer Rotationssymmetrie abweicht, beispielsweise Polygonprofile.

Die Rasten können beispielsweise dadurch gebildet sein, dass das eine Teil mit einer wellenförmig ausgebildeten Mantelfläche versehen ist, deren Wellentäler die Rasten bilden. Ein derartiges Wellenprofil ist ebenfalls auf einfache Art und Weise herstellbar.

Der Einrücker ist vorzugsweise durch einen Stößel gebildet, der unter seiner Verschiebung den Sperrkörper in die Raste hineinverlagert. Vorzugsweise ist der Stößel in einer Bohrung des mit der Anschlagfläche versehenen Teils verschieblich angeordnet und mit seiner zur Anlage an den Sperrkörper vorgesehenen Stößelfläche den Rasten des anderen Teils zugewandt. Die Wandung der Bohrung kann zur Führung des Stößels vorgesehen sein.

Der Ausrücker ist auf besonders einfache Art und Weise durch ein vorgespanntes Federelement gebildet, das den Sperrkörper in Richtung auf den Freiraum anfedert. Nach entfernen der Last, die von dem einen auf das andere Teil übertragen wird, federt der Sperrkörper unter der Federkraft des vorgespannten Federelementes aus der Raste heraus und in den Freiraum hinein. Auf diese Weise ist ein selbsttätiges Ausrücken der Kupplung gewährleistet, wenn keine Last von dem einen auf das andere Teil übertragen wird.

Das Federelement ist vorzugsweise durch ein Federband gebildet, wobei die Sperrkörper in Taschen des Federbandes aufgenommen sind. Dieses Federband übernimmt demzufolge zwei Funktionen: einerseits ist die bereits erwähnte Anfederung in Richtung auf den Freiraum gewährleistet. Andererseits sind die Sperrkörper einwandfrei in den Taschen gehalten und geführt. Wenn die beiden Teile drehbar ineinander aufgenommen sind, ist das ringförmige Federband zwischen diesen beiden Teilen angeordnet und radial federnd vorgespannt.

Eine weitere erfindungsgemäße Variante sieht vor, dass das Federband einen in Richtung auf die Anschlagfläche vorspringenden ersten Wulst und einen in Richtung auf die Rasten vorspringenden zweiten Wulst aufweist, wobei der erste und der zweite Wulst gemeinsam den Sperrkörper bilden. Bei dieser erfindungsgemäßen Weiterbildung übernimmt das Federband eine dritte Funktion, nämlich die des Sperrkörpers. Der Wegfall separater Sperrkörper ermöglicht somit das Herstellen einer besonders einfachen und preiswerten erfindungsgemäßen Kupplung.

Das mit der Anschlagfläche versehene Teil weist vorzugsweise eine Ausnehmung auf, die den Freiraum und deren Wandung zugleich die Anschlagfläche bildet. Eine derartige Ausnehmung kann beispielsweise in einem Ring auf einfache Art und Weise eingebracht werden.

Dieses andere Teil kann mit einander benachbarten, vorzugsweise als Rampen ausgebildete Anschlagflächen gegenläufiger Steigung versehen sein. Bei einer derartigen erfindungsgemäßen Weiterbildung ist ein Einrücken der Kupplung in der einen und in der dazu entgegengesetzten Richtung gewährleistet.

Zur einwandfreien Führung und Ausrichtung der Sperrkörper kann ein Käfig vorgesehen sein, in dessen Käfigtaschen die Sperrkörper angeordnet sind.

An dem vorzugsweise ringförmig ausgebildeten Käfig ist wenigstens eine federelastisch ausgelenkte Blattfeder befestigt ist, die den Sperrkörper hintergreift und in Richtung auf den Freiraum anfedert. Derartige Blattfedern können aus einem Federstahl gebildet sein und beispielsweise auf die Stege aufgeklippst werden.

Weiter oben wurde bereits erwähnt, dass die beiden Teile vorzugsweise durch einen Außenring und einen Innenring gebildet sind, wobei der Außenring und der Innenring an ihren einander zugewandten Mantelflächen mit den Rasten und der Anschlagfläche versehen sind. Die so gebildete einbaufertige Baueinheit kann in vorteilhafter Weise durch eine radiale Lagerung des Außenrings auf dem Innenring ergänzt werden, wobei diese radiale Lagerung axial benachbart zu der Kupplung vorgesehen ist. Zu diesem Zweck können der Innenring und der Außenring an ihren einander zugewandten Mantelflächen mit Laufbahnen versehen sein, an denen Wälzkörper abwälzen. Auf diese Weise ist eine mit einem Radialwälzlager kombinierte Kupplung geschaffen, bei der einerseits radiale Lasten und andererseits Drehmomente einwandfrei von dem Außenring auf den Innenring oder umgekehrt übertragen werden können, wobei eine kompakte Baueinheit geschaffen ist.

### Kurze Beschreibung der Zeichnung

Nachstehen wird die Erfindung anhand von 10 in insgesamt 13 Figuren dargestellten Ausführungsbeispielen näher erläutert. Es zeigen:
- Figur 1: einen Ausschnitt einer erfindungsgemäßen Kupplung im Querschnitt;
- Figur 2: eine weitere erfindungsgemäße Kupplung in einer Darstellung wie in Figur 1;
- Figur 3: eine weitere erfindungsgemäße Kupplung in einer Darstellung wie in Figur 1;
- Figur 4: eine weitere erfindungsgemäße Kupplung in einer Darstellung gemäß Figur 1;
- Figur 5: eine Einzelheit der erfindungsgemäßen Kupplung aus Figur 4;
- Figur 6: eine weitere erfindungsgemäße Kupplung in einer Darstellung gemäß Figur 1;
- Figur 7: eine weitere erfindungsgemäße Kupplung in einer Darstellung gemäß Figur 1;
- Figur 8: eine weitere erfindungsgemäße Kupplung in einer Darstellung gemäß Figur 1;
- Figur 9: eine weitere erfindungsgemäße Kupplung in einer Darstellung gemäß Figur 1,
- Figur 10: die erfindungsgemäße Kupplung aus Figur 9 in eingerückter Stellung;
- Figur 11: eine Einzelheit einer weiteren erfindungsgemäßen Kupplung in einer Darstellung gemäß Figur 1 und
- Figur 12: eine Einzelheit einer erfindungsgemäßen Kupplung in einer Darstellung gemäß Figur 1.
- Figur 13: eine weitere erfindungsgemäße Kupplung im Längsschnitt

### Ausführliche Beschreibung der Zeichnung

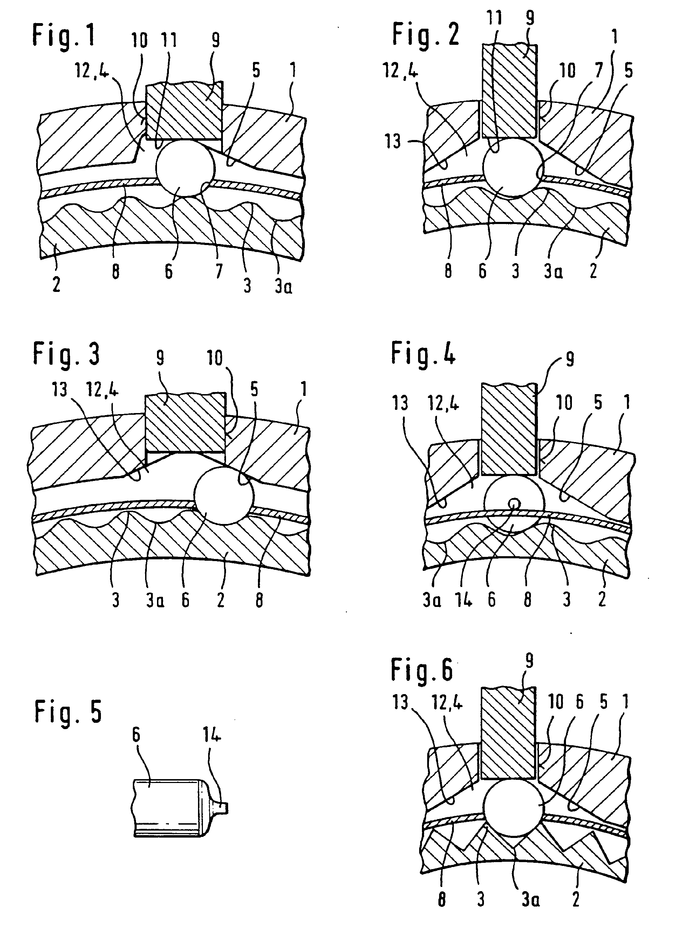

Figur 1 zeigt in gebrochener Darstellung im Querschnitt eine erfindungsgemäße Kupplung. Ein Außenring 1 und ein Innenring 2 sind drehbar ineinander angeordnet. Der Innenring 2 ist an seiner dem Außenring 1 zugewandten Mantelfläche wellenförmig ausgebildet, wobei Wellen 3 achsparallel zur Drehachse der beiden Ringe 1, 2 ausgerichtet sind. Einander benachbarte Wellen 3 begrenzen Rasten 3a. Der Außenring 1 ist an seiner dem Innenring 2 zugewandten Seite mit mehreren über den Umfang verteilt angeordneten einer Ausnehmungen 4 versehen, die jeweils durch eine sich in Umfangsrichtung erstreckende Rampe 5 begrenzt ist, die als Anschlagfläche für als Rollen 6 ausgebildete Sperrkörper dient.

Zwischen dem Außenring 1 und dem Innenring 2 sind mehrere über den Umfang verteilt angeordnete Rollen 6 angeordnet, von denen lediglich eine dargestellt ist. Die Rolle 6 ist in einer Tasche 7 eines ringförmig gebogenen Federbandes 8 angeordnet, wobei die Erstreckung der Tasche 7 in Umfangsrichtung kleiner ist als der Durchmesser der Rolle 6. Die Rotationsachse der Rolle 6 ist außerhalb des Federbandes 8 angeordnet. Das Federband 8 ist nach radial innen vorgespannt und federt die Rolle 6 in Richtung auf die Ausnehmung 4 an.

Der Figur 1 ist weiterhin zu entnehmen, dass ein Stößel 9 in einer radialen Bohrung 10 des Außenrings 1 verschieblich geführt ist. Der Stößel 9 ist stirnseitig mit einer Stößelfläche 11 zur Anlage an die Rolle 6 versehen.

In der Darstellung ist der Stößel 9 bereits aus seiner Ausgangsstellung um eine Teilstrecke nach radial einwärts in Richtung auf den Innenring 2 verlagert. In seiner Ausgangsstellung ist der ausgerückte Stößel 9 soweit nach radial außen verlagert, dass die Rolle 6 unter der Federkraft des Federbandes 8 derart in einen durch die Ausnehmung 4 gebildeten Freiraum 12 hinein verlagert ist, dass die Rolle 6 außer Kontakt mit dem Innenring 2 ist.

Figur 2 zeigt eine weitere erfindungsgemäße Kupplung, die sich von der in Figur 1 dargestellten Kupplung im Wesentlichen dadurch unterscheidet, dass die Wandung der Ausnehmung 4 eine weitere Rampe 13 bildet, die eine gegenläufige Steigung zur Rampe 5 aufweist. Auf diese Weise ist gewährleistet, dass ein zwischen dem Außenring 1 und dem Innenring 2 übertragenes Drehmoment in beiden Drehrichtungen übertragen werden kann. Figur 2 zeigt den Stößel 9 in seiner eingerückten Stellung, in der dieser mit seiner Stößelfläche 11 die Rolle 6 in eine der Rasten 3a hineindrückt.

Figur 3 zeigt die Kupplung gemäß Figur 2 in eingerückter Stellung. Der Außenring 1 und der Innenring 2 sind soweit zueinander verdreht, dass die Rolle 6 einerseits an der einen Raste 3a und andererseits an der Rampe 5 unter Druck anliegt. Der lichte Abstand zwischen dem Innenumfang des Außenrings 1 und dem Außenumfang des Innenrings 2 ist kleiner als der Durchmesser der Rolle 6. Auf diese Weise ist ausgeschlossen, dass die Rolle 6 diesen lichten Spalt passieren kann. Ein sicherer Formschluß zwischen dem Außenring 1 und dem Innenring 2 ist daher gewährleistet. Der Figur 3 ist ferner zu entnehmen, dass der Stößel 9 nach radial außen verlagert und nicht länger in Kontakt mit der Rolle 6 ist. Der Stößel 9 ist daher zur einwandfreien Übertragung eines Drehmomentes nicht notwendigerweise erforderlich und dient vorzugsweise dem Ausrücken der Rolle 6 aus dem Freiraum 12 heraus und in die Raste 3a hinein.

Soll ein Drehmoment in der entgegengesetzten Richtung übertragen werden, liegt die Rolle 6 an der Raste 3a und an der Rampe 13 an.

Figur 4 zeigt eine weitere erfindungsgemäße Kupplung, die sich von der aus den Figuren 2 und 3 dadurch unterscheidet, dass die Rollen 6 an ihren stirnseitigen Enden Zapfen 14 tragen, die auf dem Federband 8 aufliegen. Die Anfederung der Rollen 6 in Richtung auf den Freiraum 12 erfolgt somit über die Zapfen 14. Die Zapfen 14 sind deutlich in der Figur 5 dargestellt:

Die erfindungsgemäße Kupplung nach Figur 6 unterscheidet sich von der aus den Figuren 2 und 3 im Wesentlichen dadurch, dass die Wellen 3 und die benachbarten Wellentäler bzw. Rasten 3a spitz zulaufen.

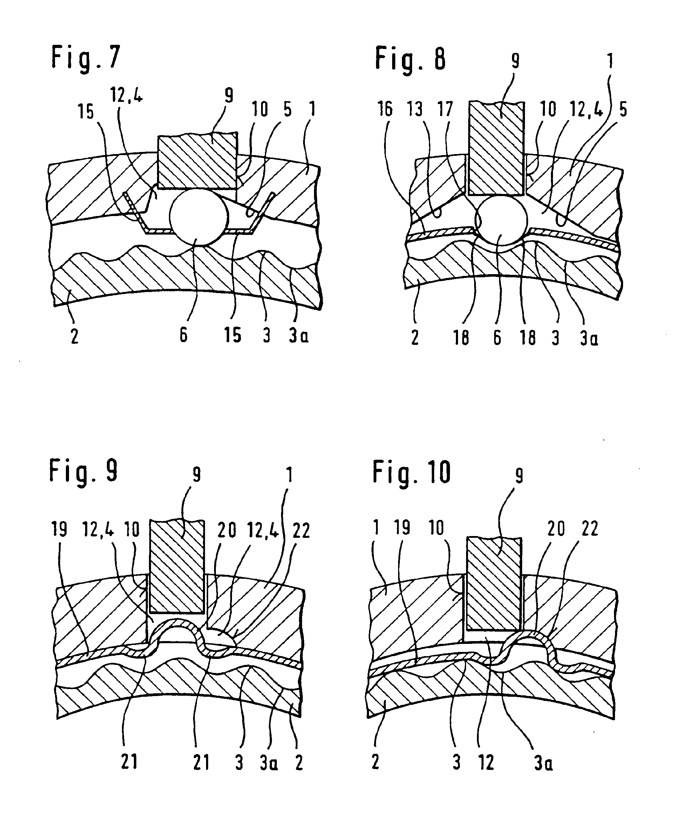

Die erfindungsgemäße Kupplung nach Figur 7 unterscheidet sich von der aus der Figur 1 im Wesentlichen dadurch, dass anstelle eines ringförmigen Federbandes jeweils für eine Rolle 6 zwei abgewinkelte Blattfedern 15 vorgesehen sind, die einerseits an dem Außenring 1 befestigt sind, und die andererseits die Rolle 6 hintergreifen und in Richtung auf den Freiraum 12 anfedern.

Die erfindungsgemäße Kupplung nach Figur 8 unterscheidet sich von der aus den Figuren 2 und 3 im Wesentlichen dadurch, dass anstelle eines Federbandes ein starrer Käfig 16 vorgesehen ist, in dessen Käfigtaschen 17 die Rollen 6 angeordnet sind. Zur Anfederung der Rollen 6 in Richtung auf den Freiraum 12 sind je Rolle 6 zwei Blattfedern 18 vorgesehen, die beide an umfangsseitig einander gegenüberliegenden Enden der Käfigtasche 17 an dem Käfig 16 befestigt sind, wobei die Blattfedern 18 in die Käfigtasche 17 hineinkragen und die Rolle 6 hintergreifen.

Die erfindungsgemäße Kupplung nach den Figuren 9 und 10 unterscheidet sich von den oben beschriebenen Kupplungen im Wesentlichen dadurch, dass separate Rollen als Sperrkörper entfallen sind. Statt dessen ist ein ringförmig gebogenes Federband 19 vorgesehen, das nach radial innen vorgespannt ist, wobei das Federband 19 einen radial auswärts vorspringenden ersten Wulst 20 und zwei radial einwärts vorspringende zweite Wülste 21 aufweist. Der erste Wulst 20 ist umfangsseitig zwischen den beiden zweiten Wülsten 21 angeordnet. Die Wülste 20, 21 sind durch entsprechendes Umbiegen des Federbandes 19 gebildet. Eine an dem Außenring 1 ausgebildete Rampe 22 ist konkav gewölbt, wobei die Wölbung der Außenkontur des ersten Wulstes 20 angepasst ist. Während Figur 9 die Kupplung in ausgerückter Position zeigt, zeigt Figur 10 diese Kupplung in eingerückter Stellung. Der Figur 10 ist zu entnehmen, dass der Wulst 20 an der Rampe 22 anliegt, wobei der linksseitig angeordnete Wulst 21 an der zugeordneten Raste 3a anliegt. Der radiale Abstand vom Fuß des zweiten Wulstes 21 bis zum Kopf des ersten Wulstes 20 ist größer als der lichte Abstand zwischen dem Außenring 1 und dem Innenring 2. Auf diese Weise ist eine einwandfreie formschlüssige Drehmomentübertragung gewährleistet.

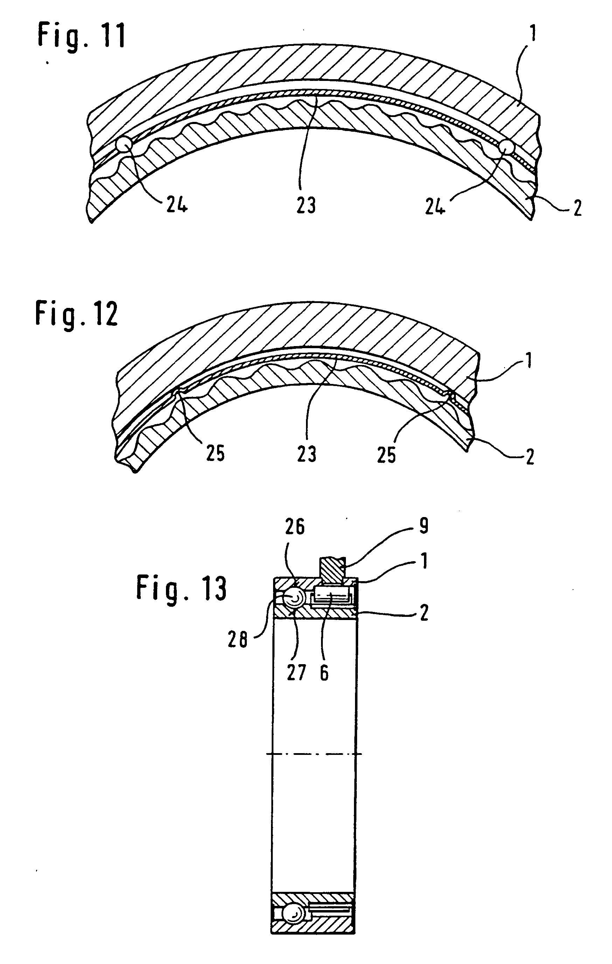

Die Figuren 11 und 12 zeigen ausschnittsweise den Außenring 1 und den Innenring 2 mit einem dazwischen angeordneten Käfig oder Federband 23, wie es weiter oben ausführlich beschrieben wurde. Da dieses Federband 23 gegenüber dem Außenring 1 während des Einrückvorgangs der Kupplung relativ verschoben wird, ist das Federband 23 mit drehbar gelagerten Wälzkörpern 24 (Figur 11) oder alternativ mit radial auswärts vorspringenden Gleitnoppen 25 (Figur 12) bestückt. Die Wälzkörper 24 wälzen während der Relativverschiebung zwischen Federband 23 und Außenring 1 an der inneren Mantelfläche des Außenrings 1 ab, während im Fall der Gleitnoppen 25 diese in Gleitkontakt mit der inneren Mantelfläche des Außenrings 1 stehen. In beiden Fällen ist ein leichtgängiges Verschieben des Federbandes 23 gegenüber dem Außenring 1 gewährleistet.

Figur 13 zeigt eine erfindungsgemäße Kupplung im Längsschnitt. Der Aufbau und die Wirkungsweise der Kupplung ist übereinstimmend mit den oben beschriebenen Ausführungsbeispielen. Zusätzlich ist hier jedoch der Außenring 1 auf dem Innenring 2 radial gelagert. Zu diesem Zweck sind die beiden Ringe 1, 2 an ihren einander zugewandten Mantelflächen mit Laufbahnen 26, 27 für Wälzkörper 28 versehen, die an den Laufbahnen 26, 27 abwälzen. Bei dieser mit einem Radiallager - anstelle eines Wälzlagers ist auch ein Gleitlager geeignet - kombinierten Kupplung ist eine einwandfreie Übertragung von radialen Lasten und von Drehmomenten gewährleistet. Diese Baueinheit ist kompakt und kann in der vorgesehenen Umgebung ohne großen Arbeitsaufwand eingebaut werden.

Für alle beschriebenen Ausführungsbeispiele kann eine den Einbaubedingungen angepasste Art der Betätigung des Stößels vorgesehen werden. Beispielsweise kann der Stößel durch elektromagnetische Kraft ein- und ausgerückt werden.

### Bezugszahlen

- 1: Außenring
- 2: Innenring
- 3: Welle
- 3a: Raste
- 4: Ausnehmung
- 5: Rampe
- 6: Rolle
- 7: Tasche
- 8: Federband
- 9: Stößel
- 10: Bohrung
- 11: Stößelfläche
- 12: Freiraum
- 13: Rampe
- 14: Zapfen
- 15: Blattfeder
- 16: Käfig
- 17: Käfigtasche
- 18: Blattfeder
- 19: Federband
- 20: erster Wulst
- 21: zweiter Wulst
- 22: Rampe
- 23: Federband
- 24: Wälzkörper
- 25: Gleitnoppen
- 26: Laufbahn
- 27: Laufbahn
- 28: Wälzkörper

## Patentansprüche

1. Kupplung, mit zwei zueinander beweglich angeordneten Teilen (1, 2), von denen das eine mit mehreren Rasten (3a) und von denen das andere mit wenigstens einer den Rasten (3a) zugewandten Anschlagfläche (5, 13, 22) versehen ist, und mit wenigstens einem Sperrkörper (6, 20, 21), der bei Eingriff in zumindest eine der Rasten (3a) einerseits und Anlage an die Anschlagfläche (5, 13, 22) andererseits die beiden Teile (1, 2) formschlüssig miteinander verbindet, und mit einem für den Sperrkörper (6, 20, 21) vorgesehenen Freiraum (12) in dem der Sperrkörper (6, 20, 21) außer Eingriff mit der Raste (3a) ist **gekennzeichnet durch** einen an dem Sperrkörper (5, 20, 21) angreifenden verschiebbaren Einrücker (9), um den Sperrkörper (6, 20, 21) aus dem Freiraum (12) heraus und in die Raste (3a) hinein zu verlagern, und **durch** einen an dem Sperrkörper (6, 20, 21) angreifenden Ausrücker (8, 15, 19), um den Sperrkörper (6, 20, 21) aus der Raste (3a) heraus und in den Freiraum (12) hinein zu verlagern.

2. Kupplung nach Anspruch 1, bei der der Sperrkörper (6) rotationssymmetrisch ausgebildet ist.

3. Kupplung nach Anspruch 1, bei der das eine Teil (2) mit einer wellenförmig ausgebildeten Mantelfläche versehen ist, deren Wellentäler die Rasten (3a) bilden.

4. Kupplung nach Anspruch 1, bei der der Einrücker durch einen Stößel (9) gebildet ist, der unter seiner Verschiebung den Sperrkörper (6, 20, 21) in die Raste (3a) hinein verlagert.

5. Kupplung nach Anspruch 4, bei der der Stößel (9) in einer Bohrung (10) des mit der Anschlagfläche (5, 13, 22) versehenen Teils (1) verschieblich angeordnet ist und mit seiner zur Anlage an den Sperrkörper (6, 20, 21) vorgesehenen Stößelfläche (11) den Rasten (3a) des anderen Teils (2) zugewandt ist.

6. Kupplung nach Anspruch 1, bei der der Ausrücker durch ein federelastisch vorgespanntes Federelement (8, 16, 19) gebildet ist, das den Sperrkörper (6, 21, 22) in Richtung auf den Freiraum (12) anfedert.

7. Kupplung nach Anspruch 6, bei der das Federelement durch ein Federband (8, 16, 19) gebildet ist, wobei die Sperrkörper (6, 20, 21) in Taschen (7) des Federbandes (8, 16, 19) aufgenommen sind.

8. Kupplung nach Anspruch 6, bei der das Federelement durch ein Federband (19) gebildet ist, das einen in Richtung auf die Anschlagfläche (22) vorspringenden ersten Wulst (20) und einen in Richtung auf die Rasten (3a) vorspringenden zweiten Wulst (21) aufweist, wobei der erste und der zweite Wulst (20, 21) gemeinsam den Sperrkörper bilden.

9. Kupplung nach Anspruch 1, bei der das andere Teil (1) eine Ausnehmung (4) aufweist, die den Freiraum (12) und deren Wandung zugleich die Anschlagfläche (5, 13, 22) bildet.

10. Kupplung nach Anspruch 1, bei der das andere Teil (1) mit einander benachbarten Anschlagflächen (5, 13) gegenläufiger Steigung versehen ist.

11. Kupplung nach Anspruch 1, bei der ein Käfig (16) vorgesehen ist, in dessen Käfigtaschen (17) die Sperrkörper (6) angeordnet sind.

12. Kupplung nach Anspruch 11, bei der wenigstens eine federelastisch ausgelenkte Blattfeder (18) an dem Käfig (16) befestigt ist und den Sperrkörper (6) hintergreift und in Richtung auf den Freiraum (12) anfedert.

13. Kupplung nach Anspruch 1, bei der die beiden Teile (1, 2) durch einen Außenring (1) und einen Innenring (2) gebildet sind, wobei der Außenring (1) und der Innenring (2) an ihren einander zugewandten Mantelflächen mit den Rasten (3a) und der Anschlagfläche (5, 13, 22) versehen sind.

14. Kupplung nach Anspruch 13, bei der eine radiale Lagerung des Außenrings (1) auf dem Innenring (2) axial benachbart zu der Kupplung vorgesehen ist.

15. Kupplung nach Anspruch 14, bei der der Innenring (2) und der Außenring (1) an ihren einander zugewandten Mantelflächen mit Laufbahnen (26, 27) versehen sind, an denen Wälzkörper (28) abwälzen.

## Claims

1. Clutch, having two parts (1, 2) which are arranged so as to be moveable relative to one another, one of which is provided with a plurality of indentations (3a) and the other of which is provided with at least one stop face (5, 13, 22) which faces towards the indentations (3a), and having at least one locking body (6, 20, 21) which connects the two parts (1, 2) to one another in a positively-locking fashion when it engages in at least one of the indentations (3a) at one side and bears against the stop face (5, 13, 22) at the other side, and having a free space (12) provided for the locking body (6, 20, 21), in which free space (12) the locking body (6, 20, 21) is out of engagement with the indentation (3a), **characterized by** a displaceable engaging member (9) which engages on the locking body (6, 20, 21) to displace the locking body (6, 20, 21) out of the free space (12) and into the indentation (3a), and by a disengaging member (8, 15, 19) which engages on the locking body (6, 20, 21) to displace the locking body (6, 20, 21) out of the indentation (3a) and into the free space (12).

2. Clutch according to Claim 1, in which the locking body (6) is rotationally symmetrical.

3. Clutch according to Claim 1, in which one part (2) is provided with a corrugated lateral surface whose wave troughs form the indentations (3a).

4. Clutch according to Claim 1, in which the engaging member is formed by a plunger (9) which, when displaced, displaces the locking body (6, 20, 21) into the indentation (3a).

5. Clutch according to Claim 4, in which the plunger (9) is arranged in a displaceable manner in a bore (10) of that part (1) which is provided with the stop face (5, 13, 22), wherein the plunger face (11), which is provided for bearing against the locking body (6, 20, 21), of said plunger (9) faces towards the indentations (3a) of the other part (2).

6. Clutch according to Claim 1, in which the disengaging member is formed by a resiliently elastically preloaded spring element (8, 16, 19) which resiliently forces the locking body (6, 20, 21) in the direction of the free space (12).

7. Clutch according to Claim 6, in which the spring element is formed by a spring strip (8, 16, 19), with the locking bodies (6, 20, 21) being held in pockets (7) of the spring strip (8, 16, 19).

8. Clutch according to Claim 6, in which the spring element is formed by a spring strip (19) which has a first bead (20) which projects in the direction of the stop face (22) and a second bead (21) which projects in the direction of the indentations (3a), the first and second beads (20, 21) together forming the locking body.

9. Clutch according to Claim 1, in which the other part (1) has a recess (4) which forms the free space (12) and whose wall simultaneously forms the stop face (5, 13, 22).

10. Clutch according to Claim 1, in which the other part (1) is provided with stop faces (5, 13) which are situated adjacent to one another and have opposing gradients.

11. Clutch according to Claim 1, in which a cage (16) is provided, with the locking bodies (6) being arranged in the cage pockets (17) of said cage (16).

12. Clutch according to Claim 11, in which at least one resiliently elastically deflected leaf spring (18) is fastened to the cage (16) and engages behind the locking body (6) and resiliently forces the latter in the direction of the free space (12).

13. Clutch according to Claim 1, in which the two parts (1, 2) are formed by an outer ring (1) and an inner ring (2), the outer ring (1) and the inner ring (2) being provided, on their lateral surfaces which face one another, with the indentations (3a) and the stop face (5, 13, 22).

14. Clutch according to Claim 13, in which a radial bearing arrangement of the outer ring (1) on the inner ring (2) is provided axially adjacent to the clutch.

15. Clutch according to Claim 14, in which the inner ring (2) and the outer ring (1) are provided, on their lateral surfaces which face one another, with raceways (26, 27) on which rolling bodies (28) roll.

## Revendications

1. Embrayage avec deux éléments (1, 2) disposés de façon mobile l'un par rapport à l'autre dont l'un est muni de plusieurs crans d'arrêt (3a) et dont l'autre est muni d'au moins une surface de butée (5, 13, 22) faisant face aux crans d'arrêt (3a), et avec au moins un élément de blocage (6, 20, 21), qui lorsqu'il s'engage dans au moins l'un des crans d'arrêt (3a) d'une part et lorsqu'il s'appuie sur la surface de butée (5, 13, 22) d'autre part, relie par complémentarité de forme les deux éléments (1, 2) entre eux, et avec un interstice (12) prévu pour l'élément de blocage (6, 20, 21), dans lequel l'élément de blocage (6, 20, 21) est hors engagement par rapport au cran d'arrêt (3a), **caractérisé par** un enclencheur (9) déplaçable saisissant l'élément de blocage (6, 20, 21), pour déplacer l'élément de blocage (6, 20, 21) hors de l'interstice (12) et à l'intérieur du cran d'arrêt (3a), et par un déclencheur (8, 15, 19) saisissant l'élément de blocage (6, 20, 21), pour déplacer l'élément de blocage (6, 20, 21) hors du cran d'arrêt (3a) et à l'intérieur de l'interstice (12).

2. Embrayage selon la revendication 1, dans lequel l'élément de blocage (6) est conçu de façon symétrique en rotation.

3. Embrayage selon la revendication 1, dans lequel un élément (2) est muni d'une surface d'enveloppe conçue sous forme ondulée, dont les creux de l'onde forment les crans d'arrêt (3a).

4. Embrayage selon la revendication 1, dans lequel l'enclencheur est formé par un coulisseau (9), qui lors de sa translation déplace l'élément de blocage (6, 20, 21) à l'intérieur du cran d'arrêt (3a).

5. Embrayage selon la revendication 4, dans lequel le coulisseau (9) est disposé de façon déplaçable dans un perçage (10) de l'élément (1) muni de la surface de butée (5, 13, 22) et avec sa surface de coulisseau (11) prévue pour s'appuyer sur l'élément de blocage (6, 20, 21) est dirigé vers les crans d'arrêt (3a) de l'autre élément (2).

6. Embrayage selon la revendication 1, dans lequel le déclencheur est formé par un élément à ressort (8, 16, 19) élastique précontraint, qui contraint l'élément de blocage (6, 20, 21)en direction de l'interstice (12).

7. Embrayage selon la revendication 6, dans lequel l'élément à ressort est formé par une lame de ressort (8, 16, 19), les éléments de blocage (6, 20, 21) étant logés dans des poches (7) de la lame de ressort (8, 16, 19).

8. Embrayage selon la revendication 6, dans lequel l'élément à ressort est formé par une lame de ressort (19) qui comporte un premier bourrelet (20) saillant en direction de la surface de butée (22) et un deuxième bourrelet (21) saillant en direction des crans d'arrêt (3a), le premier et le deuxième bourrelet (20, 21) formant en commun l'élément de blocage.

9. Embrayage selon la revendication 1, dans lequel l'autre élément (1) comprend un évidement (4) qui forme l'interstice (12) et dont la paroi forme simultanément la surface de butée (5, 13, 22).

10. Embrayage selon la revendication 1, dans lequel l'autre élément (1) est muni de surfaces de butée (5, 13) voisines l'une de l'autre avec une pente à contresens.

11. Embrayage selon la revendication 1, dans lequel est prévue une cage (16) dans les alvéoles (17) de laquelle les éléments de blocage (6) sont disposés.

12. Embrayage selon la revendication 11, dans lequel au moins un ressort à lames (18) dévié élastiquement est fixé sur la cage (16) et s'accroche par derrière sur l'élément de blocage (6) et le contraint en direction de l'interstice (12).

13. Embrayage selon la revendication 1, dans lequel les deux éléments (1, 2) sont formés par une bague extérieure (1) et par une bague intérieure (2), la bague extérieure (1) et la bague intérieure (2) étant munies, sur leurs surfaces d'enveloppe qui se font face, des crans d'arrêt (3a) et des surfaces de butée (5, 13, 22).

14. Embrayage selon la revendication 13, dans lequel un logement radial de la bague extérieure (1) sur la bague intérieure (2) est prévu en direction axiale, dans le voisinage de l'embrayage.

15. Embrayage selon la revendication 14 dans lequel sur leurs surfaces d'enveloppe qui se font face, la bague intérieure (2) et la bague extérieure (1) sont munies de voies de roulement (26, 27) sur lesquelles se déroulent des corps de roulement (28).
